Europäisches Patentamt

**European Patent Office**

**Office européen des brevets**

(11) Publication number: **0 168 094**
**A1**

## (12) EUROPEAN PATENT APPLICATION

(21) Application number: **85200980.2**

(22) Date of filing: **17.02.83**

(51) Int. Cl.⁴: **A 01 N 27/00**

(30) Priority: **20.02.82 GB 8205080**

(43) Date of publication of application:
**15.01.86 Bulletin 86/3**

(84) Designated Contracting States:
**AT BE CH DE FR GB IT LI LU NL SE**

(60) Publication number of the earlier application
in accordance with Art. 76 EPC: **0 087 269**

(71) Applicant: **COALITE GROUP LIMITED**
**Buttermilk Lane**
**Bolsover nr.Chesterfield Derbyshire S44 6AB(GB)**

(72) Inventor: **Everest-Todd, Selwyn**
**Willow House Research Unit Thorpe-le-Street**
**Everingham York, Y04 4LJ(GB)**

(74) Representative: **Seaborn, George Stephen et al,**
**c/o Edward Evans & Co. Chancery House 53-64 Chancery**
**Lane**
**London WC2A 1SD(GB)**

(54) **Plant growth regulators.**

(57) Plant growth regulator comprises an inert carrier or diluent and at least one substituted naphthalene selected from 1,3- and 2,6-dimethylnaphthalenes. A method for preventing the premature sprouting of potatoes comprises applying to the potatoes such a plant growth regulator.

EP 0 168 094 A1

Croydon Printing Company Ltd.

"PLANT GROWTH REGULATORS"

DESCRIPTION

The present invention relates to plant growth regulators. It is an object of the present invention to provide novel and efficacious plant growth regulators.

There is provided by the present invention a plant growth regulator comprising an inert diluent or carrier and as the active substance, at least one substituted naphthalene selected from 1,3-dimethylnaphthalene and 2,6-dimethylnaphthalene.

The plant growth regulator may further comprise another growth regulator, not being a substituted naphthalene, and/or a disease control material.

The growth regulators of the present invention are particularly useful for preventing the premature sprouting of potatoes.

The invention includes a method for preventing the premature sprouting of potatoes which comprises applying to the potatoes a plant growth regulator as defined above.

Examples of disease control materials are guanidinium compounds, benzimidazole compounds chlorinated aromatic or aliphatic compounds or substituted thiocarbamates. Examples of growth regulators other than substituted naphthalenes are mitosis inhibitors e.g. substituted carbamates, or metabolic interference compounds having a C-C-N-N linkage e.g. N-dimethylamino succinamic acid or ethylene generators e.g. eth phon (that is 2-chloroethyl phosphoric acid).

Dimethylnaphthalenes are particularly useful in that their rate of disappearance from the potatoes after application is such that the subsequent growth of the treated tubers shows little, if any, abnormality.

Depending on the active substance or substances employed, a growth regulator according to the present invention may be made up by dispersing or dissolving the active substance or substances in a liquid or solid carrier; and depending upon the manner in which it is made up, it may be applied to the plants as a particulate solid or in the form of a mist or a thermal vapour or fog.

For instance, 2,6-dimethylnaphthalene may be wet milled so as to produce a colloidal suspension e.g. of 50% weight/volume of the active substance or mixture thereof, for subsequent dilution with water on application to the plants e.g. as a mist, or it may be dispersed as a powder throughout a granular carrier, e.g. diatamaceous earth, with a suitable sticker, e.g. carboxyl methyl cellulose, being used to adhere the particles of the active substance to the granules of the carrier. A suitable concentration of the 2,6-dimethylnaphthalene is 1 part to 9 parts by weight of the granular carrier. Again, a mixture of isomers of dimethylnaphthalene may be diluted with a suitable diluent e.g. a monomethylnaphthalene, for application to the plants as a thermal fog or vapour; a suitable dilution being one volume of the mixed isomers and five volumes of the diluent. Alternatively, the liquid mixture of isomers may be dispersed throughout a granular carrier along with a sealing agent, e.g. carboxy methyl cellulose, to give a granular composition containing, for example, 10% active substance. The mixture of isomers, however, may be used without a diluent and applied as a thermal fog.

Dosage rates will depend on the precise manner in which the growth regulator is made up but, in the case of 2,6-dimethylnaphthalene, the dosage rate is preferably such as to give a concentration of 100 to 240 milligrammes of the active substance per kilogramme of potatoes whereas, in the case of a liquid mixture of isomers of dimethylnaphthalenes, the dosage rate is such as preferably to give rise to a concentration of 20 millilitres to 200 millilitres per tonne of potatoes.

Growth regulators according to the present invention are illustrated in the following Examples.

Example 1.

2,6-dimethylnaphthalene (DMN), a crystalline solid capable of being wet milled so as to produce a colloidal suspension with a particle size (10-20 microns) was combined with a fungicide 2,4-thiazolylbenzimidazole (TBZ) in the proportion of 4 parts of DMN to 1 part of TBZ. The combination was formulated as a colloidal suspension 50% wt/vol. active ingredient. This formulation was then diluted with water so as to give a dispersion suitable for application by low volume misting apparatus to potato tubers. The dosage rate was maintained at a constant total volume of one litre per tonne of tubers with a concentration of active materials which was varied so as to give a concentration of active substance ranging from 120-240 mg. per kg. The tubers were then stored in a constant environment store and maintained under a storage regime of 10°C and relative humidity of 94.

Example 2.

10 parts of dimethylnaphthalene isomers were combined with 1 part of a fungicide guanidinododecane acetate (GDA). The combination was formulated as a colloidal suspension 50% wt/vol. active ingredient. This formulation was then diluted with water as to give a dispersion suitable for application by low volume misting apparatus to potato tubers. The dosage rate was maintained at a constant total volume of one litre per tonne of tubers with a concentration of total active materials which was varied so as to give a concentration of active materials ranging from 120-240 mg. per kg. The tubers were then stored in a constant environment store and maintained under a storage regime of $10^{\circ}C$ and relative humidity of 94.

Example 3.

10 parts of dimethylnaphthalene isomers, 1 part of GDA and 1 part of copper ethylene diamine tetraacetate (CuEDTA) made up as in Example 2. GDA decays rapidly and the CuEDTA inhibits such decay.

Example 4.

5 parts of dimethylnaphthalene isomers, 1 part of Byacin, made up as in Example 2. Byacin - a biocide - is nonyl phenoxy poly (ethyleneoxy) ethanol iodine.

Example 5.

2 parts of dimethylnaphthalene isomers, 1 part of Tecnazene (TCNB), made up as in Example 2. Tecnazene is a fungicide and also a sprout growth regulator and is tetrachloronitrobenzene.

Example 6.

Combination of D.M.N.'s:-

one litre of mixed isomers of dimethylnaphthalene was diluted with 5 litres of monomethylnaphthalene or of N-methylpyrrolidone for application to potatoes as a thermal vapour. This formulation is both stable and volatile and can be applied to bulk heaps of potatoes by means of thermal fogging apparatus. The dosage rate required varies from 50 ml per tonne of tubers to 100 ml per tonne of tubers and is best repeated at intervals of 70 to 100 days.

To one litre of mixed isomers add one litre of Tubazole applied as a thermal fog. Tubazole is a mixture of Byacin and TBZ. Dosage rate to be 100 to 200 ml. per tonne.

Example 7.

1 kilo of D.M.N. was finely ground in an attrition mill to give a particle size no greater than 50 microns. This powder was then added to 9 kilos of a granular carrier composed of diatamaceous earth and of a size described as 22/44, that is the particles are small enough to go through a 22 mesh sieve but too large to go through a 44 mesh sieve, the sieve being standard B.S.I. series. The powder was fixed to the granule surface by means of a sticker and in this case carboxy methyl cellulose was used. This granular product when dried was applied to freshly harvested potatoes at the rate of 2 kilos per tonne of potatoes.

Example 8.

A liquid mixture of dimethylnaphthalene isomers was added to an inert granular carrier composed of diamaceous earth so as to produce a granular product containing 10% of active ingredient. After the addition of the isomers, the partial sealing of the material was accomplished by the addition of 2% wt/vol. of carboxy methyl cellulose. This formulation was applied to freshly harvested potatoes at the rate of 1.5 kilos per tonne of potatoes.

Example 9.

A liquid consisting of mixed isomers of dimethylnaphthalene was formulated with an emulsifying agent namely phosphate ester emulsifier diluted with water so as to give an aqueous preparation suitable for low volume application to potato tubers at the rate of 2 litres per tonne each litre containing from 10 to 120 mg. per litre.

All of the formulations produced in the above Examples were subject to similar tests so as to

0168094

evaluate growth regulation properties.   The variety of potatoes used in these trials was "Record" and the storage conditions were such as to give abundant sprout growth.

The results of tests of the formulations of the above Examples are given in Table 1 below.   In this Table, the effectiveness of the compositions is given for disease control, namely, against skin spot, dry spot, dry rot and black scurf and for sprout control.   The results are given in terms of a score on the scale:- 0 to 10, in which in respect of sprouting "0" indicates no effect on sprouting growth and "10" indicates no sprouting growth and, in respect of disease control, "0" indicates no effect and "10" indicates no visible disease symptoms.

## TABLE 1

### DISEASE CONTROL

| FORMULATIONS | RATE APPLIED (mg/kg) | SKIN SPOT | DRY ROT | BLACK SCURF | SPROUT CONTROL |
|---|---|---|---|---|---|
| CONTROL | 0 | 0 | 0 | 0 | 0 |
| Example 1 | DMN 90 TBZ 30 | 9 | 7 | 9 | 10 |
| Example 2 | Dimethylnaphthalenes 110 GDA 11 | 8 | 5 | 9 | 10 |
| Example 3 | Dimethylnaphthalenes 110 GDA 11 CuEDTA 11 | 8 | 6 | 9 | 10 |
| Example 4 | Dimethylnaphthalenes 100 Byacin 20 | 9 | 6 | 7 | 10 |
| Example 5 | Dimethylnaphthalenes 100 TCNB 50 | 3 | 8 | 2 | 10 |
| Example 6 | Dimethylnaphthalenes 25 TBZ & Byacin 25 | 9 | 9 | 10 | 8 |
| Example 7 | Dimethylnaphthalenes 25 | 2 | 1 | 3 | 8 |
| Example 8 | Dimethylnaphthalenes 90 | 2 | 2 | 3 | 9 |
| Example 9 | Dimethylnaphthalenes 150 | 3 | 2 | 4 | 10 |

CLAIMS

1.      Plant growth regulator comprising an inert carrier or diluent and at least one substituted naphthalene selected from 1,3- and 2,6-dimethylnaphthalenes.

2.      Plant growth regulator as claimed in claim 1, further comprising another growth regulator, not being a substitued naphthalene, and/or a disease control material.

3.      Plant growth regulator as claimed in claim 2, in which the growth regulator, not being a substituted naphthalene, is a mitosis inhibitor, a metabolic interference compound or an ethylene generator.

4.      Plant growth regulator as claimed in claim 2 or 3, in which the disease control agent is a guanidinium compound, a benzimidazole compound, a chlorinated aromatic or aliphatic compound or a substituted thiocarbamate.

5.      Method for preventing the premature sprouting of potatoes, which comprises applying to the potatoes a plant growth regulator as claimed in any of claims 1 to 4.

6.      Method as claimed in claim 5, in which the plant growth regulator is in the form of a particulate solid, or in the form of a mist or thermal vapour or fog.

7.      Method as claimed in claim 5 or 6, in which the plant growth regulator is in the form of a particulate solid containing a granular carrier, the active substance being 2,6-dimethylnaphthalene and there being 1 part of the active substance to 9 parts by weight of the carrier.

8.      Method as claimed in claim 7, in which the plant growth regulator is applied at a dosage rate such as to give a concentration of 100 to 240 milligrames of active substance per kilogram of potatoes.

European Patent Office

**EUROPEAN SEARCH REPORT**

**0168094**
Application number

EP 85 20 0980

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | CHEMICAL ABSTRACTS, vol. 95, no. 15, 12th October 1981, page 174, no. 127330z, Columbus, Ohio, US; J.L. BEVERIDGE et al.: "Dimethylnaphthalene as a sprout suppressant for seed and ware potatoes" & POTATO RES. 1981, 24(1), 77-88 * Abstract * | 1-8 | A 01 N 27/00 |
| X | CHEMICAL ABSTRACTS, vol. 95, no. 17, 26th October 1981, page 167, no. 145184j, Columbus, Ohio, US; J.L. BEVERIDGE et al.: "Assessment of some volatile organic compounds as sprout suppressants for ware and seed potatoes" & POTATO RES. 1981, 24(1), 61-76 * Abstract * | 1-8 | TECHNICAL FIELDS SEARCHED (Int. Cl.4)  A 01 N |

The present search report has been drawn up for all claims

| Place of search | Date of completion of the search | Examiner |
|---|---|---|
| THE HAGUE | 30-10-1985 | DECORTE D. |